# EUROPEAN PATENT APPLICATION

(11) **EP 4 428 417 A1**
(43) Date of publication of application: **11.09.2024**
(21) Application number: 23161353.0
(22) Date of filing: 10.03.2023
(51) Int. Cl.: F16K 31/53, F16K 31/60, F16K 35/06

(54) **A VALVE ACTUATOR FOR A VALVE, SUCH AS A HVAC SYSTEM VALVE**

(30) Priority: 09.03.2023 EP 23161048
(71) Applicant: Pittway Sarl, 1180 Rolle (CH)
(72) Inventor: BRABEC, Jan, 1180 Rolle (CH); VECHET, Jiri, 1180 Rolle (CH); KALVODA, Pavel, 1180 Rolle (CH)
(74) Representative: Murgitroyd & Company

(57) **Abstract**

A valve actuator (100) for a HVAC system is provided, the valve actuator configured to control a valve within the HVAC system, the valve actuator comprising a housing (102) and an interface (101) positioned on the housing, the interface configured to, when actuated, control the flow capability of the valve, wherein the interface comprises at least two interface elements (103, 104) and wherein all the interface elements are operable by a single tool.

## Description

### FIELD OF THE INVENTION

The present invention relates to an actuator for a valve, which is used to regulate flow of fluid (e.g. hot and cold water) in HVAC systems, air treatment systems and the like.

### BACKGROUND OF THE INVENTION

In a typical HVAC system, fluid (such as hot or cold water) is distributed through the system. A fluid valve is provided in such systems in order to regulate the flow of fluid throughout the system. The valve is usually operated by a motor (e.g. a brushless DC (BLDC) motor or a stepper motor) which adjusts the opening of the valve and therefore also the amount of fluid or fluids that is allowed to flow through the valve.

The adjustment of the valve may be achieved remotely (e.g. from a building management systems (BMS), thermostat or central panel). Alternatively or in addition, an actuator may be provided to allow for manual adjustment and/or manual override of the valve setting. Such actuator is usually provided with at least one interface feature such as a selector or a switch, provided to open/close the valve and/or adjust the settings. Such a switch or selector is usually provided with a safety feature, which requires a specific tool to operate the switch or selector in order to minimize the chance of inadvertent use.

The existing actuators tend to have a single interface element. If there is more than one interface element, the operation of these gets tedious as the operator has to have a selection of tools to operate the respective switches and selectors and/or they have to remove the cover to access some of the interface elements. Overall, there is a need for improvements in the actuators.

### SUMMARY OF THE INVENTION

In a first aspect, a valve actuator for a HVAC system is provided, the valve actuator configured to control a valve within the HVAC system, the valve actuator comprising a housing and an interface positioned on the housing, the interface configured to, when actuated, control the settings of the valve, wherein the interface comprises at least two interface elements and wherein all the interface elements are operable by a single tool.

The settings of the valve may be operating parameters and may for example include an 'on' setting in which the valve is open and an 'off' setting in which the valve is closed. The settings may correspond for example to the position of a valve stem that controls the outlet opening of the valve. The settings may also or alternatively include variable open positions in which the size of the outlet opening is varied to vary flow through the valve. The setting may correspond for example to required flow parameters and/or required thermal parameters controlled by the valve.

The settings of the valve may correspond to flow capability of the valve.

In embodiments of the first aspect, one or more of the following features may be provided:
- the interface may comprise a manual operator and a mode selector, wherein the manual operator may be configured to change a mechanical output stem position and the mode selector is configured to provide selection between at least three operational modes, and wherein each operational mode of the mode selector may generate a different control signal for the valve;
- the interface may comprise a manual operator and a mode selector, wherein the manual operator may be configured to change a mechanical output stem position and the mode selector is configured to provide selection between at least three operational modes, and wherein each operational mode of the mode selector interpret received control signal differently and actuator behaves based on set configuration by mode selector;
- the mode selector may be configured to provide an off mode, in which the mode selector generates no control signal for the valve;
- the mode selector may be configured to provide an off mode, in which control signal is disconnected ;
- each interface element may comprise an opening, wherein the openings on each of the interface element may be configured to match a profile of a single tool;
- the opening on each of the interface elements may be hexagonal to match a hexagonal tool;
- the valve actuator may comprise a control unit configured to register a position of the mode selector and generate a control signal for the valve based on the registered position;
- the valve actuator may comprise a control unit configured to register a position of the mode selector and interpret received control signal based on the registered position;
- the interface elements may be positioned on the housing such that they are accessible without the need to remove the housing;
- the interface elements may be positioned on a single wall of the housing such that they are between one fourth and one half of the length of the housing;
- the interface elements may be mechanical and configured to be pushed and/or turned by a single tool to change the actuator and/or the valve settings;
- the mode selector may be configured to provide haptic feedback when a selectable position is reached.

In a particular embodiment of the first aspect, a valve actuator for a HVAC system is provided, the valve actuator configured to control a valve within the HVAC system, the valve actuator comprising a housing and an interface positioned on the housing, the interface configured with at least two interface elements, a manual operator and a mode selector, wherein the manual operator is configured to change a mechanical output stem position and the mode selector is configured to provide selection between at least three modes, and wherein each mode of the mode selector interpret received control signal differently and actuator behaves based on set configuration, wherein all the interface elements are operable by a single tool. The valve actuator may comprise a control unit configured to register a position of the mode selector and interpret received control signal differently and actuator behaves based on the registered position

In a second aspect, an assembly of a valve and a valve actuator of the first aspect is provided.

In a third aspect, a kit of is provided. The kit comprises a valve actuator of the first aspect and a tool configured to operate the valve actuator, in particular each of the valve actuator interface elements.

In a fourth aspect, a HVAC system is provided, the system comprising a valve and a valve actuator, wherein the actuator as described in the first aspect.

In a fifth aspect, a method of operating a valve actuator is provided. The valve actuator comprises a housing and an interface positioned on the housing, the interface is configured to, when actuated, control the settings of the valve, wherein the interface comprises at least two interface elements and wherein all the interface elements are operable by a single tool; the method comprising: providing a tool configured to operate each of the interface elements, and using the tool, changing the settings of the valve by operating the actuator.

In embodiments of the fifth aspect, one or more of the following features may be provided: the valve actuator may be the one of the first aspect, and the method may further comprise using the tool, changing the position of the manual operator between open and closed states and thereby opening or closing the valve, and/or using the tool, changing the settings of the valve by operating the mode selector to select a particular operational mode.

### BRIEF DESCRIPTION OF THE DRAWINGS

Specific embodiments of the present invention will now be described, by way of example only, with reference to the accompanying drawings in which:
Figure 1 shows a side view, a perspective view and a top view of an example actuator;
Figure 2 is a block diagram of a typical system of which an actuator of Fig 1 may be part;
Figure 3 is a tool used to operate the actuator;
Figure 4 is a cross-section of an actuator along the axis A (shown in Fig 1);
Figure 5 is a cross-section of an actuator along the axis C (shown in Fig 1);
Figure 6 is a cross-section of an actuator along the axis B (shown in Fig 1);
Figure 7 is a cross-section of an actuator along the axis D (shown in Fig 1);
Figure 8 is a cross-section of an actuator along the axis E (shown in Fig 1).

### DETAILED DESCRIPTION

The below description is for illustration only, and is not intended to be limiting. Various elements of embodiments described below may be combined into new embodiments not explicitly described herein, as appropriate.

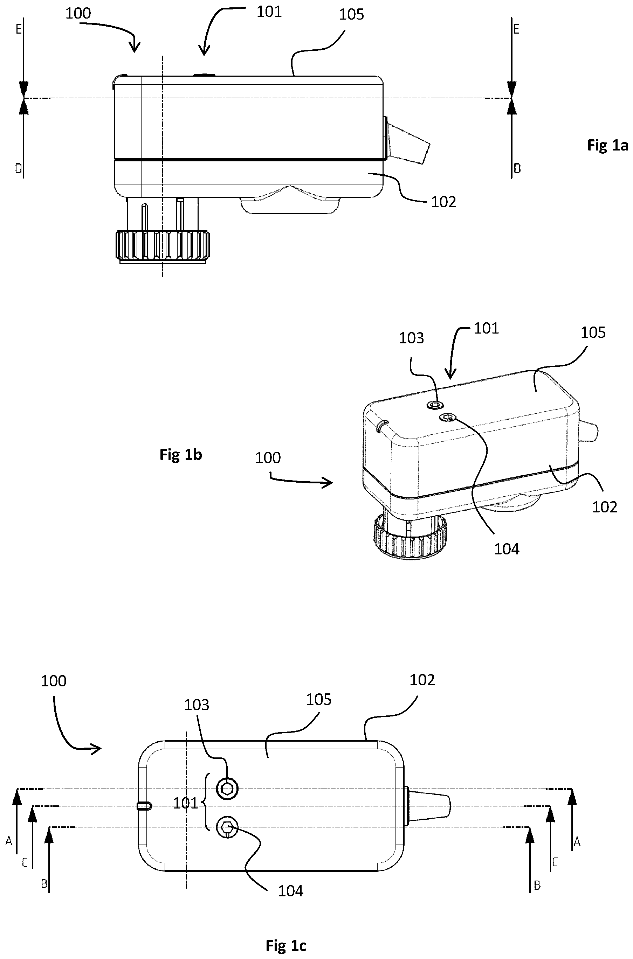

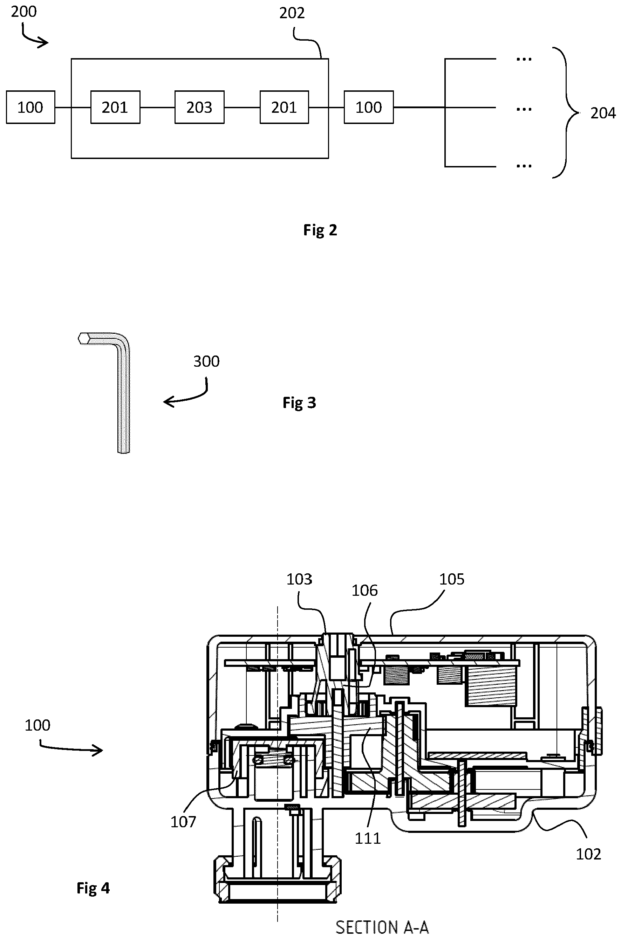

Figs 1 and 4-7 show views of an example actuator 100. The actuator 100 is connected to and operates a valve 201 (shown in Fig 2) in a system 200. The system 200 may be a HVAC system, a home heating/cooling system, a building heating/cooling system, air handling system, a fan-coil unit, heat interface unit and the like. The actuator may be part of a small reheater and recooler and/or zone control application.

For the sake of conciseness, the actuator will be described referring to the system 200 as a HVAC system. The valve 201 may be e.g. a pressure-independent control valve.

The actuator 100 and the valve 201 are a part of the HVAC system 200, which may further comprise a heating/cooling system 202. In such case, the valve 201 may regulate fluid supply into a heating/cooling unit 203 of the heating/cooling system 202. Alternatively or in addition, the valve 201 may regulate supply of the heated/cooled fluid produced in the heating/cooling unit 203 to various sub-systems and devices of the system 200 such as radiators, underfloor heating systems and the like (shown schematically as elements 204 in Fig 2). It will be understood that the valve 201 may be used in either position shown in Fig 2, or in both positions shown in Fig 2. The actuator 100 serves as an end terminal of the system 200.

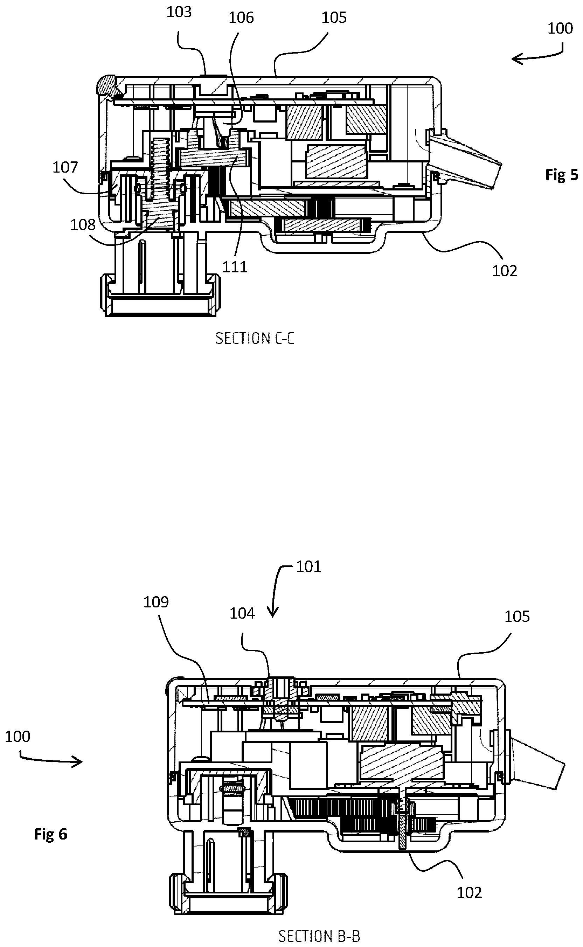

The actuator 100 allows an operator to manually control the valve 201, e.g. by allowing the operator to open/close the valve 201 (this may mean fully open and/or fully close the valve 201), adjust the settings of the valve 201, adjust the flow capability of the valve 201 and the like. For example, different setting of the valve 201 may be selected to vary the flow through the valve 201. To this end, the actuator 100 is provided with an interface 101, which is positioned on a housing 102 of the actuator 100. When the interface 101 is operated, the actuator 100 may change a position of an output stem 108 (shown in Fig 5), which is then transmitted to change the state of the valve 201. Varying positions of the stem 108 may define different settings of the valve.

The interface 101 may be positioned on the back side 105 of the housing 102, i.e. the side which, when the actuator 100 is installed on site, faces towards a wall, a radiator or other surface onto which the housing 102 is mounted. When installed on site, the back side 105 of the housing 102 may face away from a space occupied by and/or easily accessible to people.

In the example shown in the Figures, the interface 101 comprises a manual operator 103 and a mode selector 104. The interface 101 may comprise more than two elements. Alternatively or additionally to the elements shown in Fig 1, there may be e.g. a second mode selector (not shown), a RF control interface (not shown), or other interface features.

The interface 101 may be positioned asymmetrically on the housing 102. For example, if the housing 102 has a rectangular back side 105, the interface 101 may be positioned along the longitudinal axis of the rectangle and towards one of the shorter sides of the rectangle. For example, the interface 101 may be positioned in one-fourth, one third or one half of the overall length of the rectangular back side wall 105 along axis 6 (shown in Fig 4a).

To minimize interference with the interface 101 (e.g. inadvertent actuation and/or manipulation by an untrained user), the interface 101 may be provided in such a form as to not allow easy access and/or easy actuation of the interface elements. For example, the interface elements 103, 104 may be flush with the surface of the housing 102 (i.e. not protruding from the surface of the back wall 105). As shown in the Figures, the interface elements 103, 104 may be configured such that they may only be operated by a specific tool 300. In other words, the interface elements 103, 104 may comprise profile features (e.g. openings) which are designed to match a profile of a specific tool 300. In that way, a user needs the specific tool 300 to operate the actuator 100. Preferably, all interface elements 103, 104 comprise profile features (e.g. openings) which match the features of a single tool 300, so that a single tool 300 may be used to operate all the interface elements 103, 104.

In the example shown in the Figures, the interface elements 103, 104 both comprise a hexagonal opening. The hexagonal opening on the manual operator 103 is the same or very similar (e.g. within manufacturing tolerances) to the hexagonal opening on the mode selector 104. The hexagonal openings on the interface elements 103, 104 are configured to be operated by a tool 300 with a cross-section that has a hexagonal cross-section along at least part of its length. An example tool is shown in Fig 3. The tool 300 is made to match the opening in all interface elements 103, 104, such that all the interface elements 103, 104 provided within the interface 101 are operable by the same tool 300.

The hexagonal openings in the interface elements 103, 104 and the hexagonal tool 300 are given as an example; different matching features may be used for the interface elements 103, 104 and the tool 300. For example, the openings in the interface elements 103, 104 may have a different shape (a square, a star etc.), and the tool 300 may have a cross-section corresponding to the shape of the openings in the interface elements 103, 104.

The above-described configuration, and in particular the configuration of the tool 300 matching the corresponding features of both or all interface elements 103, 104 so that a single tool 300 may be used to operate both or all interface elements 103, 104, is advantageous e.g. in that the operator doesn't have to be provided with multiple tools.

With the actuator 100 shown in the Figures, there is no need to take apart the housing 102 (e.g. remove a cover) to access the interface elements 103, 104 while still keeping the interface 101 relatively safe against inadvertent operation.

The hexagonal cross-section of the openings in the interface elements 103, 104 and the tool 300 is advantageous in their ease of manufacture and availability to an operator; alternatively or in addition, a replacement tool 300 with a hexagonal cross-section may be easy to acquire.

In use of the example actuator 100 of the Figures, the tool 300 mat be inserted into the opening of one of the interface elements 103, 104 to operate that element, as described below.

For example, the rotation of the manual operator 103 may change its position between the open and closed positions. In the example shown in the Figures, the manual operator 103 is turned (rotated), and the rotation of the manual operator 103 is transmitted via a clutch 106 and gears 107, 111 to an output stem 108 (shown in Figs 4-6). The output stem 108 changes its position in response to the rotation of the manual operator 103. Alternatively or in addition, the manual operator 103 may be a switch, configured to be movable between an open position and a closed position. The manual operator 103 may be pushed to change its position between the open and closed positions.

Changing the position of the manual operator 103 between open and closed positions may control a mechanism which opens/closes the valve 201. In the example of the Figures, the mechanism comprises gears 107, 111 and an output stem 108 (shown in Fig 5). When the position of the manual operator 103 changes, for example by the manual operator 103 being rotated, the movement is transmitted via gears 107, 111 (shown in Figs 4-5) to the output stem 108 (shown in Figs 4-5). The gear 107 may be configured to transform rotational movement of the manual operator 103 into a linear movement of the output stem 108 (e.g. via helical thread). To protect the components of the actuator 100 (in particular, a gear train that transmits the movement of the manual operator 103 to the output stem 108), a mechanical clutch 106 is provided. The clutch 106 may be particularly beneficial in situations where the manual operator 103 is used close to the extreme positions (fully open / fully closed), rotated with excessive force or excessive speed, and the like.

When the manual operator 103 is in the open position, depending on the position of the valve 201 within the system 200, the valve 201 allows fluid into the heating/cooling unit 203 and/or into the sub-systems 204 (e.g. as per settings of the mode selector 104, described below). When the manual operator 103 is in closed position, the valve 201 closes and no fluid is allowed into the heating/cooling unit 203 and/or to the sub-systems 204. When the position of the manual operator 103 is changed from the open position to the closed position, the valve 201 is operated to close, i.e. no fluid flows through the valve 201. When the position of the manual operator 103 is changed from the closed position to the open position, the valve 201 is operated to allow flow of the fluid in the heating/cooling unit 203 and/or the sub-systems 204, for example in accordance with the settings of the mode selector 104 (described below).

The mode selector 104 may be provided to generate a control signal. The mode selector 104 may be provided to interpret received control signal differently and actuator behaves based on set configuration by mode selector for the valve 201.

The adjustment of the valve may be initiated remotely, by a remote control unit (not shown) such as a building management systems (BMS), thermostat or central panel. In such case, the remote control unit may generate a control signal, which is transmitted to the actuator 100. The mode selector 104 may be provided on the actuator 100 to select an interpretation of the received control signal. Each of the operational modes selectable on the mode selector 104 may provide a signal interpretation specific for a particular (different) operational mode (see e.g. examples described below). The interpretation of the control signal by the actuator 100 may be based on the settings (particular configuration, adjustment) of the mode selector 104. The actuator 100 may subsequently behave based on the settings or particular configuration set by the mode selector 104. For example, the actuator 100 may, based on the selected operational mode, select a particular interpretation of the control signal. Based on the interpretation of the control signal, which may in turn be based on the adjustment of the mode selector 104, the valve 201 behaviour (e.g. settings and/or flow capability) may be adjusted. Compared to the manual operator 103, which may only have two positions (open/closed), the mode selector 104 may have more than two positions. For example, the mode selector 104 may have three, four, five or six different positions. Different positions of the mode selector 104 may correspond to different mode settings of the actuator 100.

In an embodiment, to interpret the received control signal and control the valve 201, the mode selector 104 may be connected to an actuator control unit 109. The actuator control unit may be e.g. a printed circuit board (PCB). The actuator control unit may comprise a processing unit (not shown) and/or other necessary components to enable generating a valve control signal (a signal used to control the valve 201) based e.g. on the control signal from the remote control unit and on the mode selector 104 being set in a specific position. For example, the actuator control unit 109 may comprise a potentiometer (not shown) which enables registering the position of the mode selector 104. The position of the mode selector 104 registered by the potentiometer corresponds to a particular interpretation of a control signal received from the remote control unit. The valve control signal may be based on the control signal and the particular interpretation corresponding to the position of the mode selector 104, and may adjust the setting (e.g. flow capability) of the valve 201 in accordance with the selected operational mode. Based on the position registered by the potentiometer, the control unit 109 may interpret received control signal for the valve 201, and, consequently, e.g. change the flow capability of the valve 201. Based on the position registered by the potentiometer, the control unit 109 may interpret received control signal for the valve 201, e.g. changing the flow capability of the valve 201.

In one example, the mode selector may have five different positions, corresponding to five mode settings: proportional signal range 2-10V; proportional signal range 0-10V; proportional signal range 10-0V; proportional signal range 10-2V; and an off state. In this example, the signal ranges correspond to how the valve 201 is operated; e.g. 2V corresponds to 20% opening of the valve, while 0-10V (2-10V) is a direct mode and 10-0V (10-2V) is a reverse mode. The off state corresponds to overriding any other signals and/or disconnecting the control signal of the actuator 100.

In another example, the mode selector 104 may define different options to those described above. The mode selector 104 may allow a selection between e.g. a calibration mode, an automatic mode and an off mode. The mode selector 104 may provide options with a fail-safe functionality. Many more options may be provided. In wireless devices, the mode selector 104 may allow a choice between a wired (non-wireless) operation and several different wireless options (such as different RF bands, different network addresses, or different types of RF communication such as WiFi, BlueTooth, Zigbee, Redling and the like).

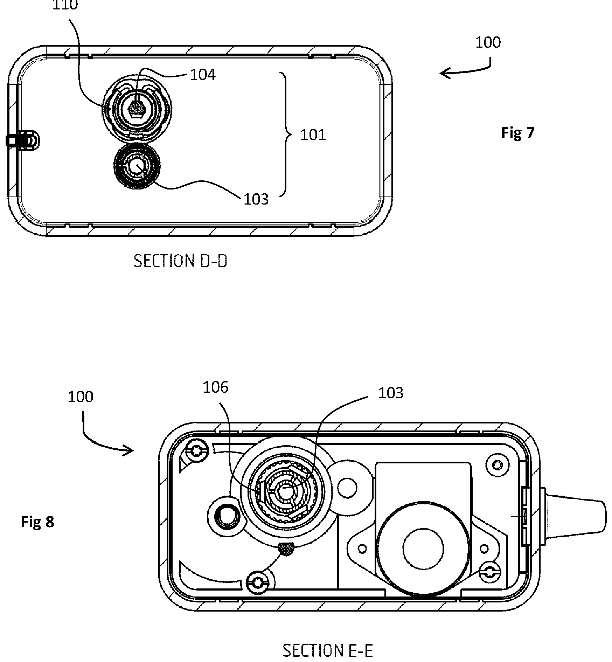

The mode selector 104 may be further provided with a haptic feedback element 110 (shown in Fig 7). Each time the mode selector 104 is turned, the haptic feedback element may provide an operator with feedback such as snap, vibration and the like, to inform the operator that a selectable position was reached.

The interface 101 is shown in the Figures to comprise two elements (manual operator 103 and mode selector 104). The interface 101 may comprise more elements. For example, the interface 101 may comprise a manual operator 103 and several mode selectors 104. The mode selectors may be configured e.g. to provide some of the functions described above. For example, a first mode selector may provide a selection between the proportional signal ranges as described above. A second mode selector may provide a selection between an automatic mode and a calibration mode. A third mode selector may provide a selection related to RF communication as described above. Further mode selectors with different (additional) options may be provided.

## Claims

1. A valve actuator for a HVAC system, the valve actuator configured to control a valve within the HVAC system,
the valve actuator comprising a housing and an interface positioned on the housing, the interface configured to, when actuated, control the flow capability of the valve,
wherein the interface comprises at least two interface elements and wherein all the interface elements are operable by a single tool.

2. A valve actuator of claim 1, wherein the interface comprises a manual operator and a mode selector, wherein the manual operator is configured to change a mechanical output stem position, wherein the mode selector is configured to provide selection between at least three modes, and wherein each mode of the mode selector corresponds to a different interpretation of the received control signal, thereby adjusting the actuator and/or the valve behaviour.

3. A valve actuator of claim 2, wherein the mode selector is configured to provide an off mode, in which control signal is disconnected.

4. A valve actuator of any one of previous claims, wherein each interface element comprises an opening, and wherein the openings on each of the interface element are configured to match a profile of a single tool.

5. A valve actuator of claim 4, wherein the opening on each of the interface elements is hexagonal to match a hexagonal tool.

6. A valve actuator of any one of claims 2-5, wherein the valve actuator comprises a control unit configured to:
register a position of the mode selector;
interpret a received control signal based on the registered position of the mode selector; and
adjust the behaviour of the valve in accordance with a selected mode based on the registered position.

7. A valve actuator of any one of preceding claims, wherein the interface elements are positioned on the housing such that they are accessible without the need to remove the housing.

8. A valve actuator of claim 7, wherein the interface elements are positioned on a single wall of the housing such that they are between one fourth and one half of the length of the housing.

9. A valve actuator of any one of preceding claims, wherein the interface elements are mechanical and wherein the interface elements are configured to be pushed and/or turned by a single tool to change the valve settings.

10. A valve actuator of any one of claims 2 to 9, wherein the mode selector is configured to provide haptic feedback when a selectable position is reached.

11. An assembly of a valve and a valve actuator, wherein the actuator is as in claims 1 to 10.

12. A kit of a valve actuator and a tool configured to operate the valve actuator, wherein the valve actuator is as in claims 1 to 10 and the tool is configured to operate each of the valve actuator interface elements.

13. A HVAC system comprising a valve and an actuator, wherein the actuator is an actuator of claims 1 to 12.

14. A method of operating a valve actuator, the valve actuator comprising a housing and an interface positioned on the housing, the interface configured to, when actuated, control the flow capability of the valve, wherein the interface comprises at least two interface elements and wherein all the interface elements are operable by a single tool;
the method comprising:
providing a tool configured to operate each of the interface elements, and
using the tool, changing the settings of the valve by operating the actuator.

15. A method of claim 14, wherein the valve actuator is the valve actuator of any one of claims 2-10 and the method further comprises:
using the tool, changing the position of the manual operator between open and closed states,
thereby opening or closing the valve, and/or
using the tool, changing the settings of the valve by operating the mode selector to select a particular mode.
